# EUROPEAN PATENT APPLICATION

(11) **EP 4 435 368 A1**
(43) Date of publication of application: **25.09.2024**
(21) Application number: 22895362.6
(22) Date of filing: 25.10.2022
(51) Int. Cl.: F28D 21/00, F28F 13/08, F28D 7/00

(54) **HEAT EXCHANGER**

(30) Priority: 16.11.2021 JP 2021186623
(71) Applicant: Sumitomo Precision Products Co., Ltd., Amagasaki-shi, Hyogo 660-0891 (JP)
(72) Inventor: UMEYAMA, Kazuya, Amagasaki-shi, Hyogo 660-0891 (JP)
(74) Representative: Viering, Jentschura & Partner mbB Patent- und Rechtsanwälte
(86) International application number: PCT/JP2022/039740
(87) International publication number: WO 2023/090078

(57) **Abstract**

The heat exchanger (100) according to this invention includes a core (1) having a plurality of flow path openings (13) arranged in a matrix, and a phase adjuster (2). Arrangement patterns in columns corresponding to each of different types of fluids are common to each other in the plurality of flow path openings. The plurality of passages (21) of the phase adjuster include inclined passage columns (23a) inclined in a column direction so as to make phases of the arrangement patterns in the columns agree with each other. Another-end openings (22b) of the passages that correspond to each of the different types of fluids are formed row by row in the phase adjuster.

## Description

### Technical Field

This invention relates to a heat exchanger, in particular to a heat exchanger including a core having flow path openings arranged in a matrix shape.

### Background Art

Heat exchangers including a core having flow path openings arranged in a matrix shape are known. Such a heat exchanger is disclosed in Japanese Patent Laid-Open Publication No. JP 2020-46161, for example.

The heat exchanger including a core with a plurality of flow paths, four headers, and a pair of distributors. A plurality of openings serving as fluid inlets or outlets corresponding to the plurality of flow paths are formed in both end parts of the core. The openings corresponding to the flow paths are arranged in a matrix shape in a surface of the core. The plurality of flow paths include two types of flow paths, which are first flow paths through which a first fluid flows and second flow paths through which a second fluid flows. The openings of the first flow paths and the opening of the second flow paths are alternately aligned in a checkered pattern in the surface of the core. Each opening is formed in a rectangular shape.

The distributor covers an entire end face of the core, and connects the flow paths to separate headers so as to connect, in the plurality of openings aligned in the checkered pattern, the openings of the first flow paths to the header of the first fluid, and the openings of the second flow paths to the header of the second fluid.

### Prior Art

### Patent Document

Patent Document 1: Japanese Patent Laid-Open Publication No. JP 2020-46161

### Summary of the Invention

### Problems to be Solved by the Invention

In the above heat exchanger, the gaps are formed between the second fluid passages adjacent to each other by forming the tubular passages whose flow path diameters are reduced relative to the openings of the core as the second fluid passages of the distributor so that the first fluid passages are formed of the gaps between the plurality of second fluid passages.

Because pressure loss occurs in the second fluid passing through the second fluid passages due to the reduction of the flow path cross-sectional area of the second fluid passages of the distributor relative to the openings of the core, and an increase of pressure loss occurs due to small cross-sectional areas of the second fluid passages themselves, pressure loss increases in an entire flow route of the second fluid. In addition, because the first fluid passages through which the first fluid flows meander so as to turn around the tubular second fluid passages, pressure loss also increases. For this reason, even in a case in which flow path openings corresponding to two or more types of fluids are formed in such a mixed arrangement in the core surface, it is desired to suppress increase of pressure loss due to distribution of the fluids.

The present invention is intended to solve the above problems, and one or more aspects of the present invention is to provide a heat exchanger capable of suppressing, even in a case in which flow path openings corresponding to two or more types of fluids are formed in a mixed arrangement in a core surface, increase of pressure loss due to distribution of the fluids.

### The means to solve the problem

The heat exchanger according to the present invention includes a core including a plurality of flow paths through which two or more of different types of fluids flow, and a core surface including a plurality of quadrangular flow path openings that are arranged in a matrix shape and each of which communicates with corresponding one of the plurality of flow paths; and a phase adjuster including a plurality of passages that are arranged in a matrix shape and each of which is connected to corresponding one of the plurality of flow path openings, and connecting to the core on the core surface, wherein the plurality of flow path openings are arranged in the core surface so that arrangement patterns of each of the different types of fluids, which flow through the plurality of flow path openings, in columns of the matrix shape are common to each other, and phases of the arrangement patterns in the columns are uncommon to each other, the plurality of passages of the phase adjuster include inclined passage columns each of which includes inclined passages that extend between one-end openings connected to the plurality of flow path openings and another-end openings, and are inclined in a column direction so as to make the phases of the arrangement patterns in the columns agree with each other, and the another-end openings of the passages that correspond to each of the different types of fluids are formed row by row in the phase adjuster by aligning the passages through which one of the different types of fluids flow in a row direction for every type.

Here, the "different types of fluids" are used to make a distinction between fluids that separately flow in the heat exchanger so that the fluids are not mixed with each other. The "arrangement patterns of each of the different types of fluids" are rules of arrangement of flow path openings classified by the different types of fluids. For example, in a case in which the types of fluids are two types of fluids A and B, a rule of an order "A, A, B, A, A, B ..." representing flow path openings corresponding to the fluids A and B is an arrangement pattern. The "phases of the arrangement patterns" refers to a concept representing positions of elements in an arrangement pattern. For example, an arrangement pattern "A, A, B, ...", an arrangement pattern "A, B, A, ...", and an arrangement pattern "B, A, A, ..." are the same arrangement pattern, but their phases are different from each other.

In the heat exchanger according to the present invention, because the phase adjuster includes the plurality of passages that are arranged in a matrix shape and each of which is connected to corresponding one of the plurality of flow path openings, and connects to the core on the core surface, and the plurality of passages of the phase adjuster include inclined passage columns each of which includes inclined passages, and are inclined in a column direction so as to make the phases of the arrangement patterns in the columns agree with each other, even in a case in which different types of flow path openings are formed in a mixed arrangement in the core surface, some of the flow path openings in a column can be connected to the inclined passage column that passes through positions shifted in the column direction. Accordingly, in a case in which arrangement patterns in columns corresponding to each of the types of fluids are common to each other in the plurality of flow path openings arranged in a matrix shape in the core surface, where one of the columns is defined as a reference column, flow path openings in a column whose phase is shifted with respect to a phase of the reference column are connected to the inclined passage column so that phases of flow path openings in each column can agree with the phase of the reference column. Because phases of arrangement patterns in the columns agree with each other, the another-end openings of the passages corresponding to the common types of fluids can be formed row by row. As a result, the common types of fluids can be introduced or drawn out row by row. According to this configuration, because gaps are not necessarily formed between passages to allow different types of fluids to separately flow, it is not necessary to reduce a cross-sectional area of passages on one side with respect to a cross-sectional area of the flow path opening. Consequently, it is possible to suppress, even in a case in which flow path openings corresponding to two or more types of fluids are formed in a mixed arrangement in the core surface, increase of pressure loss due to distribution of the fluids.

Although a complicated shape of a distributor may be formed by an additive manufacturing technology (so-called 3D printing technology), such an additive manufacturing technology is likely to create distortion in a transition part in a sectional shape in which the quadrangular flow path opening changes to the tubular passage of the distributor in formation of the distributor, that is, a degree of difficulty of formation of such a complicated distributor is high for the additive manufacturing technology. Contrary to this, according to the heat exchanger of the present invention, because the inclined passage columns, which are inclined, are merely required to be provided to the phase adjuster, the cross-sectional shape can be unchanged, or the change of the cross-sectional shape can be reduced. Consequently, it is possible to effectively reduce a risk of a formation defect created by the additive manufacturing technology.

The plurality of passages may include straight passage columns each of which includes straight passages that extend straight between the one-end and another-end openings without being inclined in the column direction, and the inclined passage columns; and the inclined passage columns are inclined so that the phases of the inclined passage columns agree with the phases of the straight passage columns. According to this configuration, the phase shift of flow path openings in columns in the core surface can be adjusted to agree with each other by providing simple straight passage columns to phase-reference columns and inclined passage columns to phase-shifted columns whose phases are shifted from the phase-reference columns in the phase adjuster. Consequently, it is possible to prevent a structure of the phase adjuster from becoming complicated.

The plurality of flow path openings in each column may include two types of columns, which are a first type column, and a second type column whose phase is shifted by one row with respect to the first type column; and the inclined passage columns are inclined in the column direction so as to shift the phases of the inclined passage columns by the one row with respect to the straight passage columns. According to this configuration, the phase shift of flow path openings in columns in the core surface can be adjusted to agree with each other by a simple structure providing the inclined passage columns inclined so as to shift their phases by the one row.

The plurality of flow path openings may include first flow path openings through which the fluid of a first type passes, and second flow path openings through which the fluid of a second type passes; and the arrangement patterns in the columns of the plurality of flow path openings are patterns in which the first flow path openings and the second flow path openings are alternatively arranged in the column direction, and the first flow path openings and the second flow path openings are alternately aligned in both the column direction and the row direction in the core surface by alternately aligning a first type column with a second type column shifted by one row with respect to the first type column in the row direction. According to this configuration, flow paths through which the fluid of the first type flows are surrounded by flow paths through which the fluid of the second type flows, and the flow paths through which the fluid of the second type flows are surrounded by the flow paths through which the fluid of the first type flows. Accordingly, because heat transfer areas of the flow paths in the core can be increased, it is possible to effectively improve heat exchange performance. Although a checkered pattern of the first and second flow path openings in the core surface makes separate introduction and drawing-out of the types of fluids difficult, passages connected to first flow path openings can be collectively aligned in rows while passages connected to second flow path openings can be collectively aligned in other rows according to the present invention. Consequently, because common types of fluids can be introduced or drawn out row by row instead of flow path by flow path, it is possible to easily introduce or draw out common types of fluids without increasing pressure loss.

The inclined passages that form the inclined passage columns may include inclined parts that are inclined so as to make the phases of the inclined passages agree with phases of other passages in adjacent columns, communicate with the other passages in the adjacent columns in the row direction on sides of the another-end openings with respect to the inclined parts, and form merging parts that transverse a plurality of columns in the row direction. According to this configuration, after phases of passages in columns of the phase adjuster are adjusted to make their phase agree with each other, and the merging part can connect the passages aligned in the row direction to each other. Accordingly, because flow space of the fluid can be increased, it is possible to effectively prevent increase of pressure loss. Also, because the same type of fluid that separately passes through flow path openings in the core surface is mixed in the merging part, temperature distribution of the fluid can be made even by mixing.

The plurality of flow path openings may include pairs of sides that extend in the column direction and have a common length; and the plurality of passages have common cross-sectional shapes to the flow path openings in the one-end openings, and are configured to make the phases of the passages in the columns agree with each other while keeping the cross-sectional shapes. According to this configuration, the phases of passages of the phase adjuster in columns can be adjusted to agree with each other while keeping the cross-sectional shapes of the flow path openings (opening shapes) in the core surface. Accordingly, it is possible to effectively prevent increase of pressure loss. In addition, because lengths of the pairs of sides of the plurality of flow path openings are the same, lengths of the pairs of sides of the plurality of flow path openings that are aligned in the row direction can also agree with each other when the phases of passages of the phase adjuster in columns are adjusted to agree with each other. Consequently, it is possible to prevent protruding and recessed parts formed in a cross section of the merging part by unevenness of lengths of the sides of the passages.

In the configuration in which the merging parts, which transverse the columns in the row direction, are formed, the phase adjuster may include a first surface connected to the core surface, and second and third surfaces facing each other in the row direction; one-end parts in the row direction of the merging parts through which the fluid of a first type flows are connected to the another-end openings formed in the second surface; and another-end parts in the row direction of the merging parts through which the fluid of a second type flows are connected to the another-end openings formed in the third surface. According to this configuration, two types of fluids received from the first surface can be separately distributed to the second surface corresponding to one type of fluid and to third surface corresponding to another type of fluid, alternatively two types of fluids received from the second and third surfaces can be supplied through the first surface to the core. In this configuration, headers for introducing or drawing out the fluids are provided to the second and third surfaces. Although, if another-end openings corresponding to one of two types of fluids are formed in a surface facing the first surface, the core is arranged on the first surface side with respect to the phase adjuster while such a header is arranged on a surface on the opposite side so that an entire length of the heat exchanger is increased by arranging the core, the phase adjuster and the header on a straight line, such an increase of the entire length of the heat exchanger can be prevented by the configuration according to the present invention in which the another-end openings are provided to the second and third surfaces.

### Effect of the Invention

According to the present invention, it is possible to provide a heat exchanger capable of suppressing, even in a case in which flow path openings corresponding to two or more types of fluids are formed in a mixed arrangement in a core surface, increase of pressure loss due to distribution of the fluids.

### Brief Description of the Drawings

FIG. 1 is a schematic perspective view entirely showing a heat exchanger.
FIG. 2 is a schematic cross-sectional view illustrating a schematic structure of the heat exchanger shown in FIG. 1.
FIG. 3 is a schematic perspective view showing a core of the heat exchanger.
FIG. 4 is a schematic plan of a core surface for illustrating an arrangement of flow path openings in the core surface.
FIGS. 5(A) and 5(B) are schematic perspective views showing a phase adjuster.
FIG. 6 is a schematic cross-sectional view of the phase adjuster taken along an inclined passage column.
FIG. 7 is a schematic cross-sectional view of the phase adjuster taken along a straight passage column.
FIGS. 8(A), 8(B) and 8(C) are schematic diagrams illustrating an arrangement of one-end openings, an arrangement of passages in an inclined-part formation position and arrangement of the passages in a side corresponding to another-end openings of the inclined part, respectively.
FIG. 9 is a schematic cross-sectional view taken along the passages at a position (row) in which first passages after their phases are adjusted.
FIG. 10 is a schematic cross-sectional view taken along the passages at a position (row) in which second passages after their phases are adjusted.
FIG. 11 is a schematic diagram illustrating flows of a first fluid in the phase adjuster.
FIG. 12 is a schematic diagram illustrating flows of a second fluid in the phase adjuster.
FIG. 13 is a schematic diagram illustrating of inclined passage columns whose phases are shifted by two rows in a modified embodiment.
FIGS. 14(A), 14(B), 14(C), and 14(D) are cross-sectional views showing shapes of flow path openings in a first modified embodiment, passages after their phases are adjusted in the first modified embodiment, shapes of flow path openings in a second modified embodiment, passages after their phases are adjusted in the second modified embodiment, respectively.
FIG. 15(A) is a schematic cross-sectional perspective view showing the first modified embodiment in which another-end openings of a phase adjuster are formed in a fourth surface, and FIG. 15(B) is a schematic view illustrating flows of fluids in the first modified embodiment.
FIG. 16(A) is a schematic cross-sectional perspective view showing the second modified embodiment in which another-end openings of a phase adjuster are formed in a fourth surface, FIG. 16(B) is a schematic view illustrating flows of a first fluid, and FIG. 16(C) is a schematic view illustrating flows of a second fluid.
FIG. 17 is a schematic cross-sectional view illustrating a flow of a first fluid in a structure according to a modified embodiment in which the fluid makes a U-turn.
FIG. 18 is a schematic cross-sectional view illustrating a flow of a second fluid in the structure according to the modified embodiment in which the fluid makes a U-turn.

### Modes for Carrying Out the Invention

Embodiments according the present invention will be described with reference to the drawings.

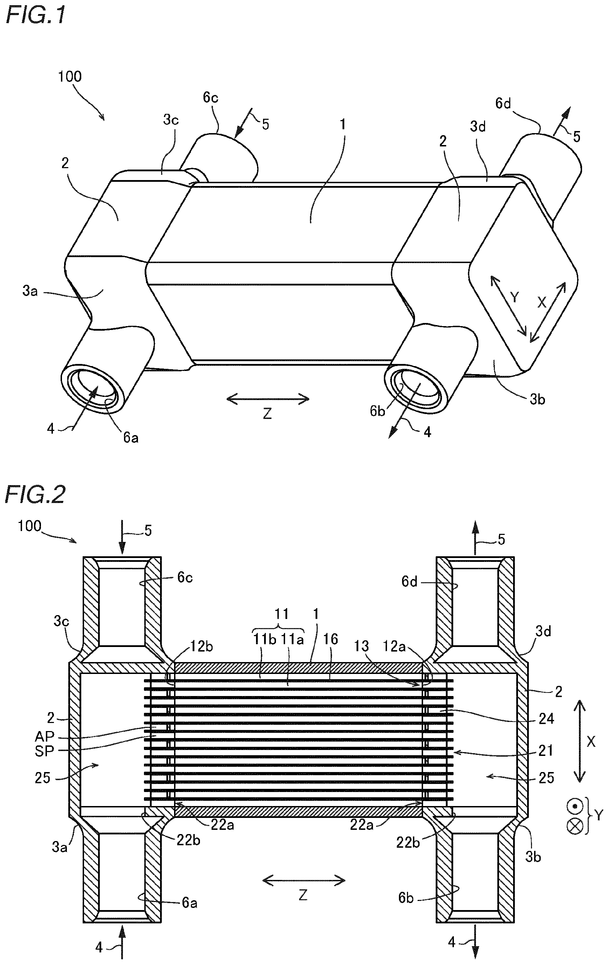

A heat exchanger 100 according to one embodiment is now described with reference to FIGS. 1 to 12.

### (Entire Configuration of Heat Exchanger)

As shown in FIG. 1, a heat exchanger 100 includes a core 1, and phase adjusters 2.

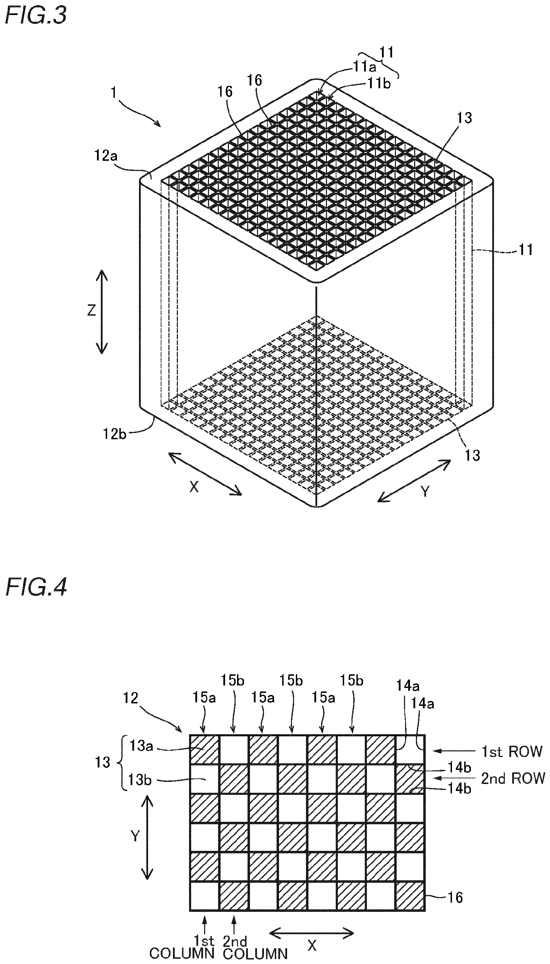

The core 1 has a tubular shape having a rectangular cross section with both ends being opened (see FIG. 3), and is configured to allow fluids to flow between one end and another end. Two or more types of fluids separately flow through the core 1. At least a first fluid 4 (a fluid of a first type) and a second fluid 5 (a fluid of a second type) separately flow through separate flow paths 11 (see FIG. 2) of the core 1 so that heat is exchanged between the first fluid 4 and the second fluid 5.

The phase adjusters 2 are connected to ends of the core 1 to allow the fluids to flow between the core 1 and the phase adjusters 2. In an exemplary arrangement of FIG. 1, one of the phase adjusters 2 is arranged on one end of the core 1, another phase adjuster is arranged on another end of the core. The phase adjusters 2 are connected to headers (3a to 3d).

The headers (3a to 3d) are configured to introduce the fluids into the core 1 or to draw out the fluids from the core 1 through the phase adjusters 2. In the exemplary arrangement of FIG. 1, the heat exchanger 100 includes four headers 3a to 3d, which are the header 3a having an inlet 6a for the first fluid 4, a header 3b having an outlet 6b for the first fluid 4, a header 3c having an inlet 6c for the second fluid 5, and a header 3d having an outlet 6d for the second fluid 5.

Each phase adjuster 2 is connected to two headers, which are the header (3a or 3b) through which the first fluid 4 flows, and the header (3c or 3d) through which the second fluid 5 flows. The phase adjuster 2 includes partitioned passages through which the first fluid 4 and the second fluid 5 separately flow. The phase adjusters 2 have a function of separately distributing the different types of fluids by separately connecting the flow paths 11 (see FIG. 2) of the core 1 corresponding to the different types of fluids to the headers (3a to 3d) corresponding to the different types of fluids.

As for the first fluid 4, the header 3a supplies the first fluid 4 flowing from the inlet 6a to the first flow path 11a of the core 1 (see FIG. 2) through the phase adjuster 2. The header 3b delivers the first fluid 4 flowing from the first flow path 11a (see FIG. 2) of the core 1 to the outlet 6b through the phase adjuster 2.

As for the second fluid 5, the header 3c supplies the second fluid 5 flowing from the inlet 6c to the second flow path 11b of the core 1(see FIG. 2) through the phase adjuster 2. The header 3d delivers the second fluid 5 flowing from the second flow path 11b (see FIG. 2) of the core 1 to the outlet 6d through the phase adjuster 2.

FIG. 2 is a cross-sectional view showing the passages that connect the header 3a and the header 3b to each other in the phase adjusters 2. Although the phase adjusters 2 are not seen to be connected to the header 3c and the header 3d in FIG. 2, the phase adjusters 2 are connected to the header 3c and the header 3d in passages that can be seen in a cross section different from the cross section shown in FIG. 2. A structure of the phase adjuster 2 will be described later.

In exemplary illustrations of FIGS. 1 and 2, the heat exchanger 100 is configured as a parallel-flow type heat exchanger for exchanging heat between the first fluid 4 and the second fluid 5 each of which flows from one end to another end of the core 1. The parallel-flow type refers to a type in which the fluids between which heat is exchanged flow in parallel to each other in the core 1.

The following description describes structures of parts of the heat exchanger 100 in detail.

### (Structure of Core)

As shown in FIG. 3, the core 1 has the plurality of flow paths 11 through which two or more of different types of fluids flow, and core surfaces 12a and 12b including a plurality of flow path openings 13 that are arranged in a matrix shape and each of which communicates with corresponding one of the plurality of flow paths 11. Each of the plurality of flow paths 11 has a tubular structure.

The core 1 shown in FIG. 3 has a rectangular parallelepiped shape. Each flow path 11 is formed to penetrate the core 1 from one end of the core 1 to another end of the core 1. Accordingly, the plurality of flow path openings 13 serving as fluid inlets or outlets corresponding to the plurality of flow paths are formed on the core surface 12a which is one end of the core 1 and on the core surface 12b which is another end of the core 1.

Each flow path 11 is a conduit having one inlet (one flow path opening 13) and one outlet (one flow path opening 13). In other words, the flow path 11 does not diverge or merge in its entire length. The flow paths 11 (flow path openings 13) are individually partitioned by partitioning walls 16. The core 1 is not an assembly of tubular elements (tubes) but a unitary element having a structure in which the flow paths 11 adjacent to each other share the partitioning walls 16.

The plurality of flow paths 11 are formed to collectively extend in a predetermined direction. In FIG. 3, the predetermined direction is a direction that connects one end to another end of the core 1. Hereinafter, the predetermined direction is defined as a Z direction. Two directions orthogonal to each other in a plane orthogonal to the Z-direction are defined as X and Y directions. Here, the X direction is a row direction (a direction parallel to rows) of the matrix-shaped flow path openings 13 in each of the core surfaces 12a and 12b, and the Y direction is a column direction (a direction parallel to columns) of the matrix-shaped flow path openings 13 in each of the core surfaces 12a and 12b.

The flow paths 11 linearly extend line in the Z direction as a simple exemplary arrangement of the flow paths 11 in FIG. 3. The flow paths 11 are not specifically limited except that shapes (quadrangular shapes) and an arrangement (matrix arrangement) of the flow path openings 13 in the core surface 12a (12b) are specified. Routes and cross-sectional shapes of flow paths 11 inside the core 1 can be any routes and any shapes.

In this embodiment, the number of types of fluids flowing through the core 1 is "2". One of the first and second types of fluids is a high-temperature fluid, and another is a low-temperature fluid. The high-temperature fluid is a fluid that is hotter than the low-temperature fluid, and releases heat through heat exchange between the high-temperature fluid and the low-temperature fluid. The low-temperature fluid is a fluid that is cooler than the high-temperature fluid, and absorbs the heat through heat exchange between the low-temperature fluid and the high-temperature fluid. The plurality of flow paths 11 include a plurality of first flow paths 11a through which the first fluid 4 of the first type passes, and a plurality of second flow paths 11b through which the second fluid 5 of the second type passes to exchange heat exchange between the first fluid 4 and the second fluid.

In this embodiment, each of the plurality of flow path openings 13 has a quadrangular shape as shown in FIG. 4. More specifically, each of the plurality of flow path openings 13 has a pair of sides 14a that extend in the column direction (Y direction) and have the same length. The pair of sides 14a extend parallel to the column direction. In an exemplary arrangement of FIG. 4, each of the plurality of flow path openings 13 has a rectangular shape. Each of the plurality of flow path openings 13 has a pair of sides 14b that extend parallel to each other in the row direction and have the same length. The sides 14a and 14b intersect each other at right angles. The rectangular shape used in this specification includes a rectangle that has pairs of side (14a and 14b) having the same length (i.e., square).

The plurality of flow path openings 13 are arranged at a constant pitch in the row direction (X direction). The plurality of flow path openings 13 are arranged at a constant pitch in the column direction (Y direction).

In this embodiment, the plurality of flow path openings 13 are arranged in the core surface 12a (12b) so that arrangement patterns of each of the different types of fluids, which flow through the plurality of flow path openings, in columns of the matrix shape are common to each other, and phases of the arrangement patterns in the columns are uncommon to each other. A column of flow path openings 13 is a series of flow path openings 13 that are aligned in the column direction (Y direction). A row of flow path openings 13 is a series of flow path openings 13 that are aligned in the row direction (X direction).

In FIG. 4, a first row, a second row, ... are aligned in this order from the top side of FIG. 4. A first column, a second column, ... are aligned in this order from the left side of FIG. 4. In the core surface 12a (12b), the flow path openings 13 are arranged in M rows and N columns.

In the exemplary arrangement shown in FIG. 4, the columns of the plurality of flow path openings 13 include two types of columns, which are a first type column 15a, and a second type column 15b whose phase is shifted by one row relative to the first type column 15a.

The plurality of flow path openings 13 include first flow path openings 13a through which the fluid of the first type (first fluid 4) passes, and second flow path openings 13b through which the fluid of the second type (second fluid 5) passes. In FIG. 4, the first flow path openings 13a are shown by hatching patterns for convenience. The arrangement pattern in each column of the plurality of flow path openings 13 is determined depending on an arrangement of the first flow path openings 13a and the second flow path openings 13b, which are elements of the arrangement pattern. In this embodiment, the arrangement pattern in each column of the plurality of flow path openings 13 is an alternating pattern in which the first flow path openings 13a and the second flow path openings 13b are alternately aligned one by one in the column direction (Y direction).

In this embodiment, the first type column 15a, and the second type column 15b whose phase is shifted by one row with respect to the first type column 15a are alternately aligned in the row direction. Accordingly, in the core surface 12a (12b), the first flow path openings 13a and the second flow path openings 13b are alternately aligned one by one in both the row direction and the column direction. In other words, in this embodiment, the first flow path openings 13a and the second flow path openings 13b are arranged in a checkered pattern (checkerboard pattern) in the core surface 12a (12b).

In the exemplary arrangement shown in FIG. 4, the arrangement patterns in columns of the plurality of flow path openings 13 are a common arrangement pattern in which the first flow path openings 13a and the second flow path openings 13b are alternately aligned. As for phases of the arrangement patterns, the phase of the first type column 15a corresponding to odd columns is a phase in which the first flow path opening 13a is arranged in the first row, and the phase of the second type column 15b corresponding to even columns is a phase in which the second flow path opening 13b is arranged in the first row. As a result, phases of the arrangement patterns of the plurality of flow path openings 13 in the columns are uncommon to each other.

The number of phases that can be included in the same arrangement pattern can vary depending on the arrangement pattern. In the arrangement pattern shown in FIG. 4, because the first flow path openings 13a and the second flow path openings 13b are alternately aligned one by one, the number of phases that can be included in this arrangement pattern is two. In a case in which an arrangement pattern is represented by A, A, B, A, A, B, ..., where the types of fluids are A and B, for example, three types of phases, which are a phase of "A, A, B", a phase of "A, B, A", a phase of "B, A, A" whose types of fluids are aligned in this order from the first row, can be included.

### (Phase Adjuster)

The following description is about a configuration of the phase adjuster 2. As shown in FIG. 2, the phase adjuster 2 is arranged on one end or another end of the core 1, and is configured to communicate with the flow paths 11 of the core 1. The phase adjuster 2 connects to the core on the core surface (core surface 12a or core surface 12b shown in FIG. 3) to entirely cover that.

In this embodiment, the phase adjuster 2 that is arranged on one end of the core 1 (core surface 12a), and the phase adjuster 2 that is arranged on another end of the core 1 (core surface 12b) have substantially a common structure. For this reason, the structure of one phase adjuster 2 that is arranged on one end of the core 1(core surface 12a) is described as the structure common to the two phase adjusters 2.

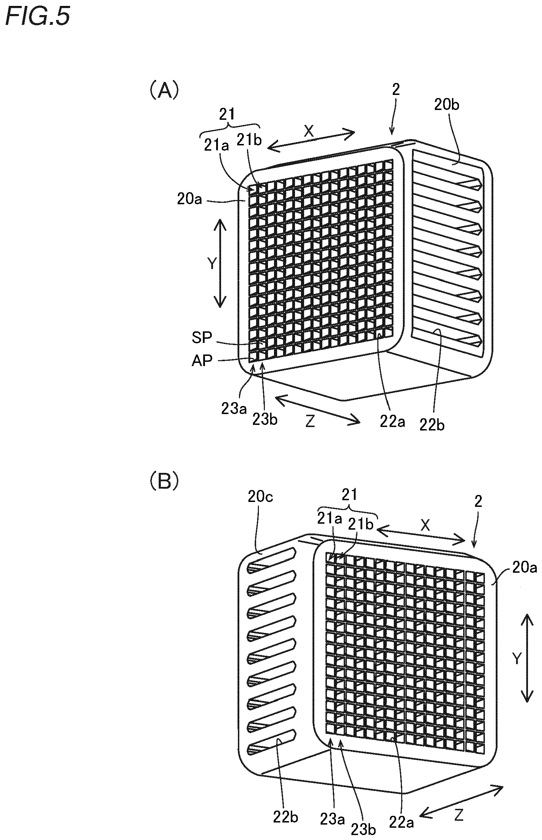

As shown in FIGS. 5(A) and 5(B), the phase adjuster 2 includes a first surface 20a connected to the core surface 12a (12b), and second and third surfaces 20b and 20c facing each other in the row direction (X direction). The phase adjuster 2 has a roughly rectangular parallelepiped as a whole.

The phase adjuster 2 includes a plurality of passages 21 that are arranged in a matrix shape and each of which is connected to corresponding one of the plurality of flow path openings 13. The number of the plurality of passages 21 is equal to the number of the plurality of flow path openings 13 so that the plurality of passages are connected to the plurality of flow path openings 13 in a one-to-one relationship. For this reason, the plurality of passages 21 are provided for corresponding one of the types of fluid similar to the plurality of flow path openings 13. In other words, the plurality of passages 21 include first type passages 21a connected to the first flow path openings 13a, and second type passages 21b connected to the second flow path openings 13b.

Each passage 21 has a one-end opening 22a, and an another-end opening 22b. Each of the plurality of passages 21 is connected to one of the flow path openings 13 in one of the core surfaces 12a (12b) through the one-end openings 22a. Accordingly, the one-end openings 22a of the passages 21 are formed in the first surface 20a of the phase adjuster 2, and are arranged in a matrix shape in the first surface 20a. In the first surface 20a, the one-end openings 22a are arranged in M rows and N columns similar to the flow path openings 13 in the core surface 12a (12b). The one-end openings 22a are arranged in the row direction (X direction) at a constant pitch equal to the pitch of the plurality of flow path openings 13. The one-end openings 22a are arranged in the column direction (Y direction) at a constant pitch equal to the pitch of the plurality of flow path openings 13. The one-end openings 22a of the passages 21 have the same cross-sectional shape (same opening shape) as the flow path openings 13. As described later, another-end openings 22b of the passages 21 are formed in the second surface 20b (see FIG. 5(A)) or the third surface 20c (see FIG. 5(B)) of the phase adjuster 2.

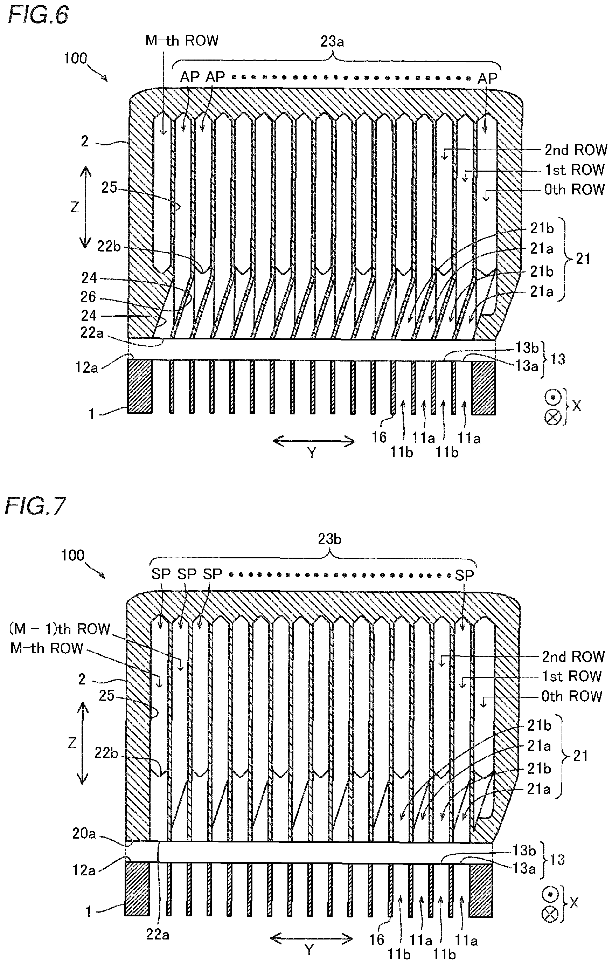

The plurality of passages 21 of the phase adjuster 2 have different structures depending on their rows. Specifically, the plurality of passages 21 of the phase adjuster 2 include inclined passage columns 23a (see FIG. 6) each of which includes inclined passages AP that are inclined in the column direction (Y direction), and straight passage columns 23b (see FIG. 7) each of which includes straight passages SP that extend straight without being inclined in the column direction. In this embodiment, the plurality of passages 21 in each column of the phase adjuster 2 includes two types of passages, which are inclined and straight passage columns 23a and 23b. All the passages 21 that form the inclined passage columns 23a are the inclined passages AP. All the passages 21 that form the straight passage columns 23b are the straight passages SP. The phase adjuster 2 (first surface 20a) and the core 1 (core surface 12a) are shown with being separated from each other in FIGS. 6 and 7 for convenience.

As shown in FIG. 7, each of the straight passages SP that form the straight passage columns 23b extends straight without being inclined in the column direction (Y direction) between the one-end opening 22a and the another-end opening 22b. Each straight passage SP extends straight in the Z direction directly from the one-end opening 22a, which is connected to the flow path opening 13 in the first surface 20a.

Accordingly, the straight passages SP that are arranged in the first row in the straight passage columns 23b are connected to the flow path openings 13 in the first row (see FIG. 4) in the core surface 12a (or the core surface 12b) so that their positions are unchanged in the column direction and kept at the first row. Also, the straight passages SP that are arranged in the second row are connected to the flow path openings 13 in the second row so that their positions are kept at the second row. The straight passages SP arranged in the last row (M-th row) are connected to the flow path openings 13 in the M-th row so that their positions are kept at the N-th row.

As shown in FIG. 6, each of the inclined passages AP that form the inclined passage columns 23a are inclined in the column direction (Y direction) between the one-end opening 22a and the another-end opening 22b to make the phases of the arrangement patterns in the columns agree with each other. That is, the inclined passages AP that form the inclined passage columns 23a include inclined parts 24 that are inclined so as to make the phases of the inclined passages agree with phases of other passages 21 in adjacent columns. Accordingly, the inclined passage columns 23a are inclined so that the phases of the inclined passage columns agree with the phases of the straight passage columns 23b.

In this embodiment, as shown in FIG. 4, because the flow path openings 13 in the core 1 are formed by the first type columns 15a, and the second type columns 15b whose phases are shifted by one row with respect to the first type columns 15a, the inclined passage column 23a in FIG. 6 is inclined in the column direction so that the phase of the inclined passage column is shifted by one row with respect to the straight passage column 23b.

In the inclined passage columns 23a, the inclined passages AP that are arranged in the first row are connected to the flow path openings 13 that are arranged in the first row in the core surface 12a (or the core surface 12b). Because the phases of the inclined passages AP that are arranged in the first row are shifted by one row, the inclined passages AP that are arranged in the first row are arranged in positions corresponding a zero-th row located out of the matrix-shapes arrangement of the flow path openings 13 by the inclination.

Also, the inclined passages AP that are arranged in the second row are connected to the flow path openings 13 in the second row so that their positions are arranged in positions corresponding the flow path openings 13 in the first row by the inclination in the column direction (Y direction). The inclined passages AP that are arranged in the last row (referred to as the M-th row) are connected to the flow path openings 13 in the M-th row so that their positions are arranged in positions corresponding the flow path openings 13 in the (M-1)th row by the inclination in the column direction.

Accordingly, in a case in which the flow path openings 13 of the core 1 are arranged in M rows, the passages 21 of the phase adjuster 2 are arranged in M rows on sides of the one-end openings 22a, while the number of rows on sides of another-end openings is increased by one row so that the number of rows becomes M + 1.

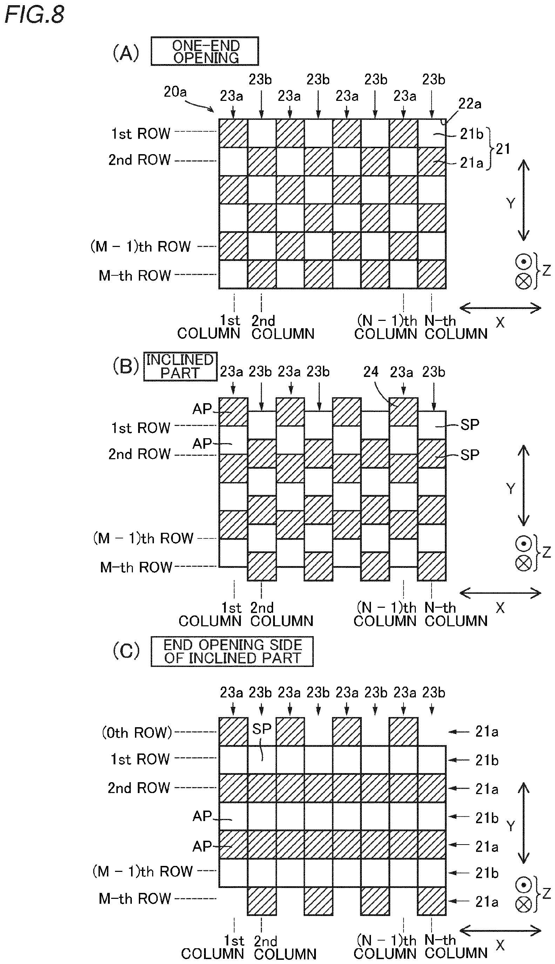

As shown in FIG. 8(A), the one-end openings 22a of the passages 21 in the first surface 20a of the phase adjuster 2 has the same arrangement as the flow path openings 13 in the core surface 12a (see FIG. 4) connected to the one-end openings. In other words, the arrangement pattern of the passage 21 in each row in the first surface 20a is a pattern in which the first type passages 21a connected to the first flow path openings 13a, and the second type passages 21b connected to the second flow path openings 13b are alternately aligned in the column direction. In the first surface 20a, the first type column (odd column), and the second type column (even column) whose phase is shifted by one row with respect to the first column are alternately aligned in the row direction. In other words, in the first surface 20a, the first type passages 21a and the second type passages 21b are alternately aligned one by one in both the row direction and the column direction so that they are arranged in a checkered pattern. In FIG. 8, the first type passages 21a are shown by hatching patterns.

In the exemplary arrangement of FIG. 8(A), the odd column is the inclined passage column 23a, while the even column is the straight passage column 23b. Accordingly, the passages 21 belonging to the inclined passage columns 23a corresponding to the odd column are connected to the flow path openings 13 belonging to the first type columns 15a corresponding to the odd column in the core surface 12a (12b) shown in FIG. 4. The passages 21 belonging to the straight passage columns 23b corresponding to the even column are connected to flow path openings 13 belonging to the second type columns 15b corresponding to the even column in the core surface 12a (12b) shown in FIG. 4.

As shown in FIG. 8(B), in an XY cross section at a formation position of the inclined parts 24 (see FIG. 6) of the inclined passage columns 23a, cross sections of the inclined passages AP that form the inclined passage columns 23a corresponding to the odd column are arranged at positions shifted with respect to the straight passage column 23b in the column direction (upward direction in FIG. 8(B)).

After passing through the inclined parts 24 of the inclined passage columns 23a, in the XY cross section at end on the sides of the another-end openings 22b of the inclined parts 24, the inclined passages AP corresponding to the odd column pass through positions shifted by one row in the column direction with respect to their initial positions (positions in the first surface 20a) as shown in FIG. 8(C).

Because the phases of the inclined passage columns 23a in the column direction are shifted by one row, the phases corresponding to the even column (straight passage columns 23b) agree with the phases corresponding to the odd column (inclined passage columns 23a).

As a result, in FIG. 8(C), in even-numbered rows of zero-th row, second row, fourth row, and sixth row, the first type passages 21a (that is, the passages through which the first fluid 4 of the first type flows), which are connected to the first flow path openings 13a, are aligned in the row direction. In odd-numbered rows of first row, third row, and fifth row, the second type passages 21b (that is, the passages through which the second fluid 5 of the second type flows), which are connected to the second flow path openings 13b, are aligned in the row direction. For ease of illustration, the number of rows is M = 6, and the number of columns is N = 8 in FIGS. 8(A) to 8(C).

Consequently, the phase adjuster 2 in this embodiment makes the phases of the arrangement patterns in the columns agree with each other so as to align the passages 21 through which the same type of fluid flows in the row direction.

As shown in FIGS. 8(A) to 8(C), in this embodiment, the plurality of passages 21 have common cross-sectional shapes to the flow path openings 13 (see FIG. 4) in the one-end openings 22a (see FIG. 8 (A)), and are configured to make the phases of the passages in the columns agree with each other while keeping the cross-sectional shapes. The passages 21 extend while keeping their cross-sectional shapes at least to the end on the sides of another-end openings of the inclined parts 24 (see FIG. 8(C)). The plurality of passages 21 are arranged at the same pitch as the arrangement pitch of the flow path openings 13 (see FIG. 4) in the one-end openings 22a (see FIG. 8(A)), and are configured to make the phases of the passages in the columns agree with each other while keeping the arrangement pitch. The passages 21 extend while keeping the arrangement pitch at least to the end on the sides of another-end openings of the inclined parts 24 (see FIG. 8(C)) .

Because the phases of the inclined passage columns 23a are shifted by one row in the column direction, only the inclined passages AP are arranged at odd-numbered columns in the zero-th row, which is newly formed, but no straight passage SP is arranged at even-numbered columns in the zero-th row at positions on the sides of the another-end openings 22b with respect to the inclined parts 24. Also, only the straight passages SP are arranged at even-numbered columns in in the last row (sixth row in FIGS. 8(A) to 8(C)), but no the inclined passage AP is arranged at odd-numbered columns in the last row.

The following description describes the structure of the phase adjuster 2 on the sides of the another-end openings 22b of the passages 21.

As shown in FIG. 8(C), the phases of the passages 21 of the phase adjuster 2 are adjusted so as to align the passages 21 through which the same type of fluid flows in the row direction. Accordingly, the another-end openings 22b (see FIG. 5) of the passages 21 that correspond to each of the different types of fluids are formed row by row in the phase adjuster 2 by aligning the passages 21 through which one of the different types of fluids flow in the row direction (X direction) for every type.

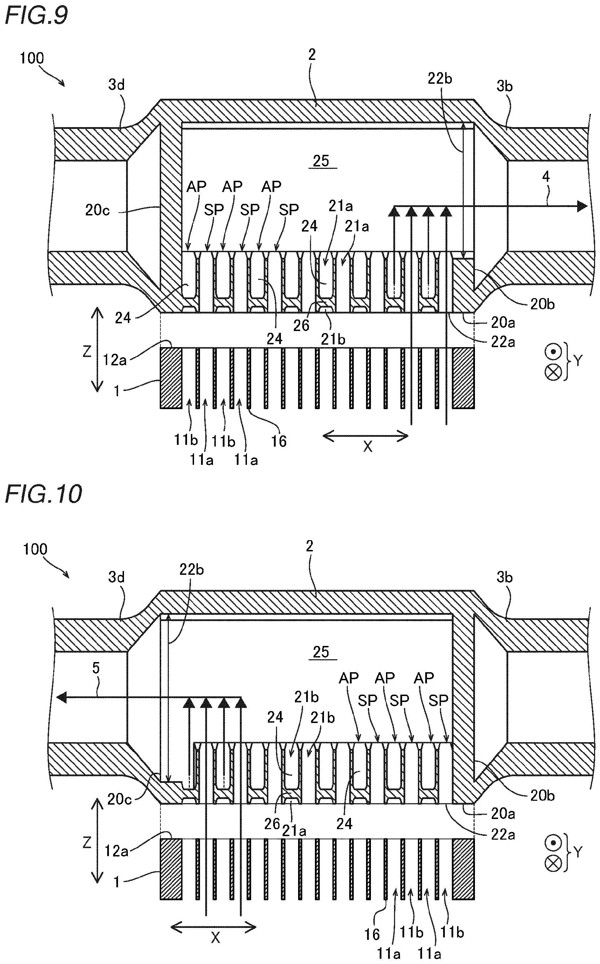

More specifically, as shown in FIGS. 9 and 10, the inclined passages AP that form the inclined passage columns 23a form merging parts 25 that communicate with other passages 21 (straight passages SP) in adjacent columns on sides of the another-end openings 22b with respect to the inclined parts 24 and transverse the columns in the row direction. The phase adjuster 2 (first surface 20a) and the core 1 (core surface 12a) are shown with being separated from each other in FIGS. 9 and 10 for convenience.

FIG. 9 is a schematic diagram showing an XZ cross section of the passages 21 that are arranged in the even column of the phase adjuster 2. The merging part 25 is formed to transverse the inclined passages AP in the odd column and the straight passage SP in the even column so that the inclined passages AP and the straight passage SP are connected in parallel to each other.

The straight passages SP in the even column extend straight directly from the one-end openings 22a to communicate with the merging part 25. The inclined passages AP in the odd column extend in a direction that shifts the inclined passages by one row in the Y direction by the inclined parts 24 immediately after the one-end openings 22a (see FIG. 6). As a result, to the merging part 25 in a row shown in FIG. 9 (referred to as m-th row), the inclined parts 24 of the inclined passages AP that are shifted from the one-end openings 22a in (m + 1)th row to m-th row are connected. In FIG. 9, inclined partitioning walls 26 that separate the inclined parts 24 in m-th row from the inclined parts 24 in (m+1)-th row are seen in the cross sections of the inclined passages AP. Accordingly, the straight passages SP in m-th row and the inclined passages AP that are shifted from (m + 1)-th row to m-th row are connected to the merging part 25.

The merging part 25 extends in the row direction (X direction), and opens in the second surface 20b or the third surface 20c of the phase adjuster 2. These openings to which the merging part 25 is connected are the another-end openings 22b. In this embodiment, the plurality of passages 21 whose phases are adjusted are connected to the merging part 25 so that a large set of another-end openings 22b formed of another ends of the plurality of passages 21 together is formed in an end part of the merging part 25.

As shown in FIG. 9, one-end parts of the merging parts 25 through which the fluid of the first type (first fluid 4) flows are connected to the another-end openings 22b formed in the second surface 20b. In other words, the merging parts 25 of the passages 21 in the even-numbered rows (zero-th row, second row, fourth row and sixth row) shown in FIG. 8(C) are connected to the another-end openings 22b in rows formed in the second surface 20b. The another-end openings 22b formed in the second surface 20b are connected to the header 3b through which the first fluid 4 flows.

Also, as shown in FIG. 10, another-end parts of the merging parts 25 through which the fluid of the second type (second fluid 5) flows are connected to the another-end openings 22b formed in the third surface 20c. In FIG. 10, the merging parts 25 of the passages 21 in the odd-numbered rows (first row, third row, and fifth row) shown in FIG. 8(C) are connected to the another-end openings 22b in rows formed in the third surface 20c. The another-end openings 22b formed in the third surface 20c are connected to the header 3d through which the second fluid 5 flows.

The another-end openings 22b to which the end of merging part 25 is connected have opening widths (width in Z direction in FIGS. 9 and 10) larger than widths of the passages 21.

Although not illustrated, no straight passage SP corresponding to the even column exists in zero-th row in FIG. 8(C), and only the inclined passages AP that are connected to the one-end openings 22a in first row at odd-numbered columns are connected to the merging part 25. Parts corresponding to the straight passages SP corresponding to the even column are defined by the partition walls. Also, no inclined passage AP corresponding to the odd column exists in the last row in FIG. 8(C), and only the straight passages SP that are connected to the one-end openings 22a in the last row at even-numbered columns are connected to the merging part 25. The inclined passages AP in the last row at odd-numbered columns are connected to the merging part 25 corresponding to (M - 1)-th row, which is shifted by one row from in the last row.

### (Flow of Fluid)

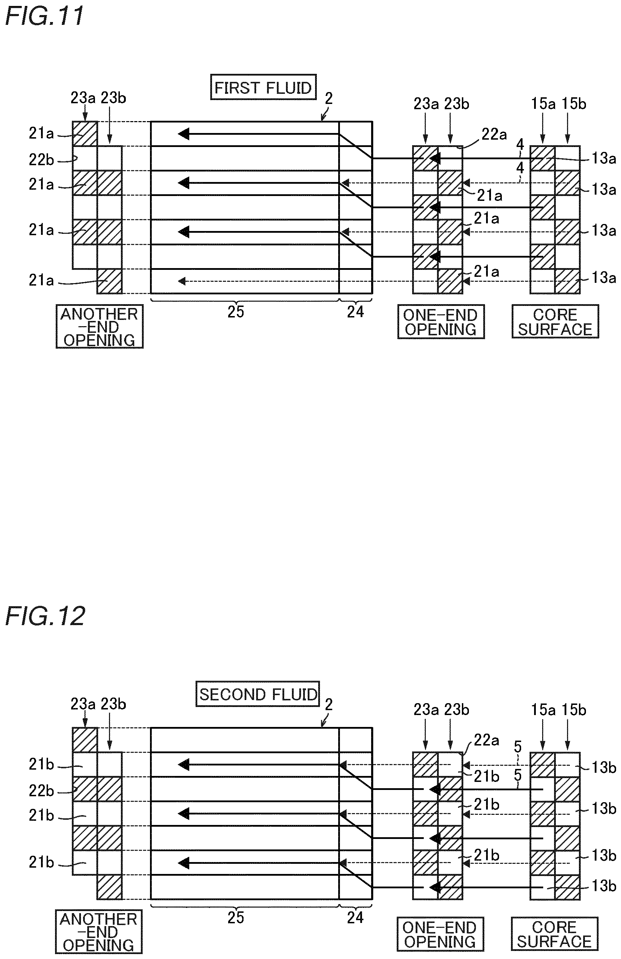

As described above, as shown in FIG. 11, the first fluid 4 passes through the first flow path openings 13a, which are alternately aligned in a checkered pattern, in the core surface 12a (core surface 12b). The first fluid 4 flowing through the first flow path opening 13a that belongs to the first type column 15a flows into the first type passage 21a of the inclined passage column 23a of the phase adjuster 2, and flows through the row that is shifted by one row. The first fluid 4 flowing through the first flow path opening 13a that belongs to the second type column 15b flows into the first type passage 21a of the straight passage column 23b of the phase adjuster 2, and flows straight through the same row. As a result, flows of the first fluid 4 flowing through the first flow path openings 13a in the columns gather into the passages 21 corresponding to even-numbered rows of the phase adjuster 2, and flows through the merging parts 25 corresponding to the even-numbered rows and out of another-end openings 22b corresponding to the even-numbered rows.

As shown in FIG. 12, the second fluid 5 passes through the second flow path openings 13b, which are alternately aligned in a checkered pattern, in the core surface 12a (core surface 12b). The second fluid 5 flowing through the second flow path opening 13b that belongs to the first type column 15a flows into the second type passage 21b of the inclined passage column 23a, and flows through the row that is shifted by one row. The second fluid 5 flowing through the second flow path opening 13b that belongs to the second type column 15b flows into the second type passage 21b of the straight passage column 23b of the phase adjuster 2, and flows straight through the same row. As a result, flows of the second fluid 5 flowing through the second flow path openings 13b in the columns gather into the passages 21 corresponding to odd-numbered rows of the phase adjuster 2, and flow through the merging parts 25 corresponding to the odd-numbered rows and out of another-end openings 22b corresponding to the odd-numbered rows.

Here, although the fluid from the core 1 has been illustratively described to flow out through the phase adjuster 2, in a case in which the fluid from the header 3a (3c) shown in FIG. 2 flows into the core 1 through the phase adjuster 2, the fluid from the another-end openings 22b in the rows is distributed to the separate passages 21 in a checkered pattern in the phase adjuster 2. In the case in which the fluid flows into the core, flows of the fluid flow through the routes in a direction opposite a direction shown by arrows in FIGS. 11 and 12.

That is, in the phase adjuster 2, the first fluid 4 (see FIG. 11) flowing into the merging part 25 through the another-end openings 22b of any of even-numbered rows flows into the straight passages SP and the inclined passages AP that are connected to the merging part 25. The fluid flowing into the straight passages SP flows into the first flow path openings 13a in the same row of the core surface 12b. The phase of the fluid flowing into the inclined passages AP is shifted by one row so that the fluid flows into the first flow path openings 13a in the row in the core surface 12b corresponding to the phase of the fluid that is shifted by one row.

Also, the second fluid 5 flowing into the merging part 25 through the another-end openings 22b of any of odd-numbered rows flows into the straight passages SP and the inclined passages AP that are connected to the merging part 25. The fluid flowing into the straight passages SP flows into the second flow path openings 13b in the same row of the core surface 12b. The phase of the fluid flowing into the inclined passages AP is shifted by one row so that the fluid flows into the second flow path openings 13b in the row in the core surface 12b corresponding to the phase of the fluid that is shifted by one row.

As a result, the types of fluids are divided into rows in the phase adjuster 2, and are distributed to the flow path openings 13 arranged in the checkered pattern in the core 1.

The heat exchanger 100 according to this embodiment is configured as described above.

The core 1, the phase adjusters 2 and the headers 3 of the heat exchanger 100 can be a three-dimensional structure formed by an additive manufacturing method, for example. Specifically, the additive manufacturing method is a powder additive manufacturing method. The powder additive manufacturing method is a method for fabricating a three-dimensional structure by repeating, in a stacking direction (fabricating direction), a process to form a layered portion by spreading a powder material in layers and irradiating a portion to be fabricated with a laser or an electron beam to melt and solidify it, so as to stack the layered portion in the stacking direction. The powder material is an iron-based, copper-based, titanium-based, or aluminum-based metal material, for example, and aluminum (or an aluminum alloy), for example, is preferable from the viewpoint of weight, mechanical strength, heat transfer performance, and the like.

In this embodiment, the heat exchanger 100 can be configured by integrally forming the core 1, the phase adjusters 2, and the four headers 3 (as a single component) separately by the additive manufacturing method and then bonding the same to each other. Alternatively, the entire heat exchanger 100 including the core 1, the phase adjuster 2, and the headers 3 can be integrally formed by the additive manufacturing method.

### (Advantages of the Embodiment)

In this embodiment, the following advantages are obtained.

In this embodiment, as described above, because the phase adjuster 2 includes the plurality of passages 21 that are arranged in a matrix shape and each of which is connected to corresponding one of the plurality of flow path openings 13, and connects to the core on the core surface 12a (12b), and the plurality of passages 21 of the phase adjuster 2 include inclined passage columns 23a each of which includes inclined passages AP, and are inclined in a column direction so as to make the phases of the arrangement patterns in the columns agree with each other, even in a case in which different types of flow path openings 13 are formed in a mixed arrangement in the core surface 12a (12b), some of the flow path openings 13 in a column can be connected to the inclined passage column 23a that passes through positions shifted in the column direction. Accordingly, in a case in which arrangement patterns in columns corresponding to each of the types of fluids are common to each other in the plurality of flow path openings 13 arranged in a matrix shape in the core surface 12a (12b), where one of the columns is defined as a reference column, flow path openings 13 in a column whose phase is shifted with respect to a phase of the reference column are connected to the inclined passage column 23a so that phases of flow path openings 13 in each column can agree with the phase of the reference column. In the plurality of passages 21 of the phase adjuster 2, because phases of arrangement patterns in the columns agree with each other, the another-end openings 22b of the passages (21a, 21b) corresponding to the common types of fluids can be formed row by row. As a result, the common types of fluids can be introduced or drawn out row by row. According to this configuration, because gaps are not necessarily formed between passages 21 to allow different types of fluids to separately flow, it is not necessary to reduce a cross-sectional area of passages 21 on one side with respect to a cross-sectional area of the flow path opening 13. Consequently, it is possible to suppress, even in a case in which flow path openings 13 corresponding to two or more types of fluids are formed in a mixed arrangement in the core surface 12a (12b), increase of pressure loss due to distribution of the fluids.

Also, according to the heat exchanger 100 of this embodiment, because the inclined passage columns 23a, which are inclined, are merely required to be provided to the phase adjuster 2, the cross-sectional shape can be unchanged, or the change of the cross-sectional shape can be reduced. Consequently, it is possible to effectively reduce a risk of a formation defect created by the additive manufacturing technology.

In this embodiment, as described above, the plurality of passages 21 includes straight passage columns 23b each of which includes straight passages SP that extend straight between the one-end and another-end openings 22a and 22b without being inclined in the column direction, and the inclined passage columns 23a; and the inclined passage columns 23a are inclined so that the phases of the inclined passage columns agree with the phases of the straight passage columns 23b. According to this configuration, the phase shift of flow path openings 13 in columns in the core surface 12a (12b) can be adjusted to agree with each other by providing simple straight passage columns 23b to phase-reference columns and inclined passage columns 23a to phase-shifted columns whose phases are shifted from the phase-reference columns in the phase adjuster 2. Consequently, it is possible to prevent a structure of the phase adjuster 2 from becoming complicated.

Also, in this embodiment, as described above, because the plurality of flow path openings 13 in each column are formed by two types of columns, which are the first type columns 15a, and the second type columns 15b whose phases are shifted by one row with respect to the first type columns 15a, and the inclined passage column 23a is inclined in the column direction so that the phase of the inclined passage column is shifted by one row with respect to the straight passage column 23b, the phase shift of flow path openings 13 in columns in the core surface 12a (12b) can be adjusted to agree with each other by a simple structure providing the inclined passage columns 23a inclined so as to shift their phases by one row.

In this embodiment, as described above, because the plurality of flow path openings 13 include first flow path openings 13a through which the fluid of a first type passes, and second flow path openings 13b through which the fluid of a second type passes; and the arrangement patterns in the columns of the plurality of flow path openings 13 are patterns in which the first flow path openings 13a and the second flow path openings 13b are alternatively arranged in the column direction, and the first flow path openings 13a and the second flow path openings 13b are alternately aligned in both the column direction and the row direction in the core surface 12a (12b) by alternately aligning a first type column 15a with a second type column 15b shifted by one row with respect to the first type column 15a in the row direction, flow paths 11 through which the fluid of the first type flows are surrounded by flow paths 11 through which the fluid of the second type flows, and the flow paths 11 through which the fluid of the second type flows are surrounded by the flow paths 11 through which the fluid of the first type flows. Accordingly, because heat transfer areas of the flow paths 11 in the core 1 can be increased, it is possible to effectively improve heat exchange performance. Although a checkered pattern of the first and second flow path openings 13a and 13b in the core surface 12a (12b) makes separate introduction and drawing-out of the types of fluids difficult, passages 21 connected to first flow path openings 13a can be collectively aligned in rows and connected to the another-end openings 22b while passages 21 connected to second flow path openings 13b can be collectively aligned in other rows and connected to the another-end openings 22b in the phase adjuster 2 according to this embodiment. Consequently, it is possible to easily introduce or draw out common types of fluids without increasing pressure loss.

In this embodiment, as described above, because the inclined passages AP that form the inclined passage columns 23a include inclined parts 24 that are inclined so as to make the phases of the inclined passages agree with phases of other passages 21 in adjacent columns, communicate with the other passages 21 in the adjacent columns in the row direction on sides of the another-end openings 22b with respect to the inclined parts 24, and form merging parts 25 that transverse a plurality of columns in the row direction, after the phases of the passages 21 in columns of the phase adjuster 2 are adjusted to make their phase agree with each other, and the merging parts 25 can connect the passages 21 aligned in the row direction to each other. Accordingly, because flow space of the fluid can be increased, it is possible to effectively prevent increase of pressure loss. Also, because the same type of fluid that separately passes through flow path openings 13 in the core surface 12a (12b) is mixed in the merging part 25, temperature distribution of the fluid can be made even by mixing.

In this embodiment, as described above, because the plurality of flow path openings 13 include pairs of sides that extend in the column direction and have a common length; and the plurality of passages 21 have common cross-sectional shapes to the flow path openings 13 in the one-end openings 22a, and are configured to make the phases of the passages in the columns agree with each other while keeping the cross-sectional shapes, the phases of passages 21 of the phase adjuster 2 in columns can be adjusted to agree with each other while keeping the cross-sectional shapes of the flow path openings 13 (opening shapes) in the core surface 12a (12b). Accordingly, it is possible to effectively prevent increase of pressure loss. In addition, because lengths of the pairs of sides of the plurality of flow path openings 13 are the same, lengths of the pairs of sides of the plurality of flow path openings that are aligned in the row direction can also agree with each other when the phases of passages 21 in columns are adjusted to agree with each other. Consequently, it is possible to prevent protruding and recessed parts formed in a cross section of the merging part 25 by unevenness of lengths of the sides of the passages 21.

In this embodiment, as described above, because the phase adjuster 2 includes a first surface 20a connected to the core surface 12a (12b), and second and third surfaces 20b and 20c facing each other in the row direction; one-end parts of the merging parts 25 through which the fluid of the first type flows are connected to the another-end openings 22b formed in the second surface 20b; and another-end parts of the merging parts 25 through which the fluid of the second type flows are connected to the another-end openings 22b formed in the third surface 20c, two types of fluids received from the first surface 20a can be separately distributed to the second surface 20b corresponding to one type of fluid and to the third surface 20c corresponding to another type of fluid, alternatively two types of fluids received from the second and third surfaces 20b and 20c can be supplied through the first surface 20a to the core 1. In this configuration, headers for introducing or drawing out the fluids are provided to the second and third surfaces 20b and 20c. Although, if another-end openings 22b of one of two types of fluids are formed in a surface facing the first surface 20a, the core 1 is arranged on the first surface 20a side with respect to the phase adjuster 2 while such a header is arranged on a surface on the opposite side so that an entire length of the heat exchanger 100 is increased by arranging the core 1, the phase adjuster 2 and the header on a straight line, such an increase of the entire length of the heat exchanger 100 can be prevented by the configuration according to the present invention in which the another-end openings 22b are provided to the second and third surfaces 20b and 20c.

### [Modified Embodiments]

The embodiment is illustrative and not restrictive.

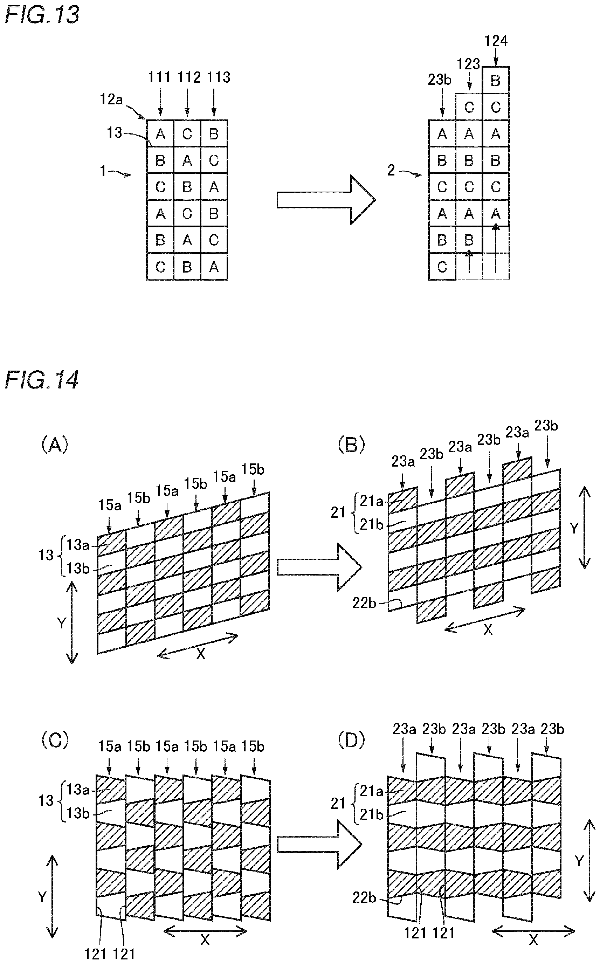

In the present invention, the number of types of fluids can be three or greater. For example, a fluid A and a fluid B can flow as high-temperature fluids through the core 1, and a fluid C can flow as a low-temperature fluid through the core 1 so that heat can be exchanged between the fluids A and B, and the fluid C. In this case, first to third flow path openings 13 (A to C in FIG. 13) corresponding to the three types of fluids are formed in the core 1 as shown in FIG. 13. Correspondingly, first to third passages 21 (A to C in FIG. 13) corresponding to the three types of fluids are formed in the phase adjuster 2.

In the present invention, as shown in FIG. 13, in a case of three types of fluids, which are a fluid A, a fluid B and a fluid C, it is conceived that columns corresponding to the flow path openings 13 include a first type column 111, a second type column 112 and a third type column 113 whose phases are different from each other. In this case, in the phase adjuster 2, the phase of the second type column 112 can be shifted by one row by an inclined passage column 123, and the phase of the third type column 113 can be shifted by two rows by an inclined passage column 124 so that the phases of the columns can agree with the phase of the first type column 111. As in this case, phases of the inclined passage columns can be shifted by two or more rows.

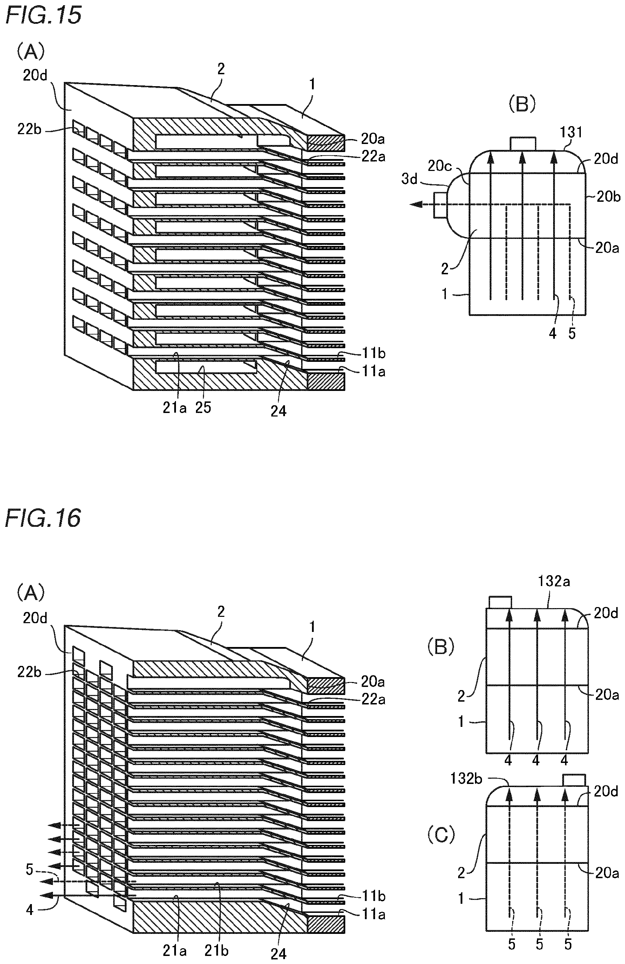

In the present invention, the passages 21 that are aligned in the row direction can be connected to separate another-end openings 22b without merging after phase adjustment. In this case, the another-end openings 22b corresponding to the separate passages 21 can be aligned in the row direction (see FIG. 15(A)).

In the present invention, each of the plurality of flow path openings 13 can have a shape other than such a rectangular shape. For example, an arrangement of parallelogram flow path openings 13 is shown in FIG. 14(A), and a cross-sectional shape of the passages 21 after phase adjustment corresponding to FIG. 14(A) in FIG. 14(B). An arrangement of trapezoidal flow path openings 13 is shown in FIG. 14(C), and a cross-sectional shape of the passages 21 after phase adjustment corresponding to FIG. 14(C) is shown in FIG. 14(D).

In the present invention, a pair of sides of each of the plurality of flow path openings 13 can have different lengths. One side and another side of a pair of sides 121 of the trapezoidal flow path opening 13 shown in FIGS. 14(C) and 14(D) have different lengths. In this case, as shown in FIG. 14 (D), a height (Y-directional dimension) of a cross section of each of the passages 21, which are aligned in the row direction after phase adjustment changes in the row direction. Although if the merging part 25 is provided in this case a height of the merging part 25 changes depending on a position in the row direction, the height of the merging part 25 does not change if the pair of sides have the same length as in FIG. 14(B), and for this reason it is preferable that the pair of sides have the same length.

In the present invention, another-end openings 22b can be formed in a surface other than the second surface 20b and the third surface 20c. For example, in FIGS. 15(A) and 15(B), the another-end openings 22b through which the first type of fluid flows are formed in a fourth surface 20d facing the first surface 20a. The passages 21 connected to the another-end openings 22b in the fourth surface 20d extend from the first surface 20a in the Z direction and reach the fourth surface 20d. Accordingly, flows of the first fluid 4 can be collectively drawn out to a header 131 that covers the fourth surface 20d. Although the another-end openings 22b through which the second fluid 5 flows are formed in the third surface 20c in FIG. 15(B), the another-end openings 22b through which the second fluid 5 flows can be formed in the second surface 20b.

Also, in FIGS. 16(A) to 16(C), both the another-end opening 22b of the first type passage 21a through which the first fluid 4 flows and the another-end opening 22b of the second type passage 21b through which the second fluid 5 flows are formed in the fourth surface 20d. In a case of FIG. 16(A), the another-end openings 22b in odd-numbered rows in the fourth surface 20d are connected to a header 132a, as shown in FIG. 16(B) so that the first fluid 4 flows into the header. The another-end openings 22b in even-numbered rows in the fourth surface 20d are connected to a header 132b, as shown in FIG. 16(C) so that the second fluid 5 flows into the header. According to this configuration in which the header 132a connected to the another-end openings 22b in the odd-numbered rows, and the header 132b connected to the another-end openings 22b in the even-numbered rows are provided, different types of fluids can be separately drawn out from the common fourth surface 20d.

In the present invention, the heat exchanger can be configured as a counter-flow type heat exchanger in which fluids used for heat exchanging flow in opposite directions.

In the present invention, the headers 3a to 3d can be collectively arranged on one end side or another end side of the core 1 so that the fluids make a U-turn (turn around).

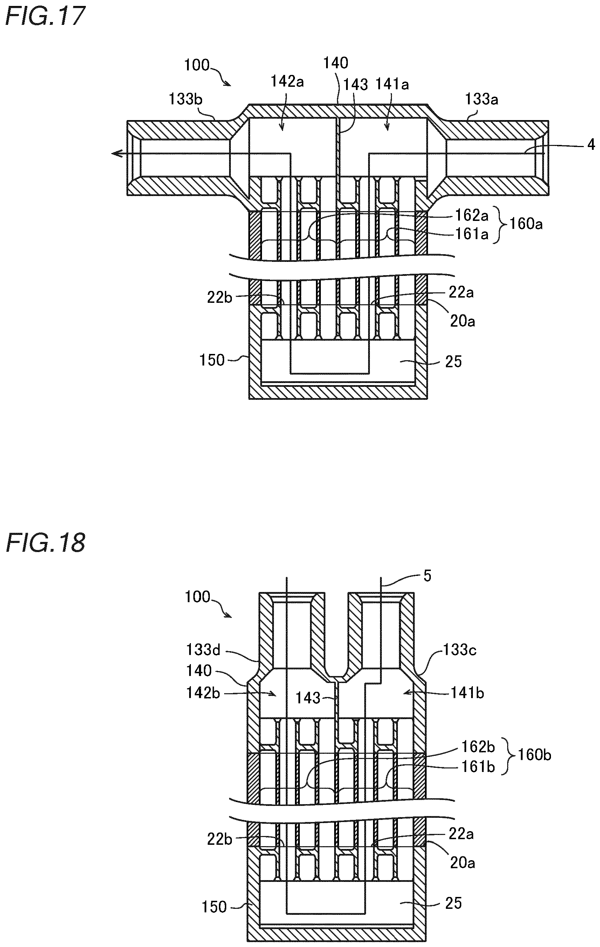

In exemplary arrangements shown in FIGS. 17 and 18, an interior of a phase adjuster 140 on one end of the core 1 is divided into two areas, which are an inlet area and an outlet area.

The phase adjuster 140 includes the inlet and outlet areas 141a and 142a, which are connected to first flow paths 160a through which the first fluid 4 flows. The inlet area 141a and the outlet area 142a are separated by a partitioning wall 143. The inlet and outlet areas 141a and 142a are arranged in even-numbered rows of the phase adjuster 140, for example. The first flow paths 160a of the core 1 include incoming flow paths 161a connected to the inlet area 141a and outgoing flow paths 162a connected to the outlet area 142a. The first fluid 4 flows from a header 133a into the inlet area 141a of the phase adjuster 140, and is distributed to the incoming flow paths 161a of the core 1. A phase adjuster 150 on another end of the core 1 has one-end openings 22a connected to the incoming flow paths 161a, and another-end openings 22b connected to the outgoing flow paths 162a in the first surface 20a. In the phase adjuster 150, the one-end openings 22a corresponding to the first type passage 21a are connected to the incoming flow paths 161a of the core 1, and the another-end openings 22b corresponding to the first type passage 21a are connected to the outgoing flow paths 162a of the core 1. Accordingly, the first fluid 4 that flows from each incoming flow path 161a into each first type passage 21a of the phase adjuster 150 makes a U-turn in even-numbered rows in the merging part 25 after phase adjustment, and flows into each outgoing flow path 162a of the core 1 through the another-end opening 22b of each first type passage 21a. The first fluid 4 flows from the outgoing flow paths 162a into the outlet area 142a of the phase adjuster 140, and flows out to a header 133b.

A flow route of the second fluid 5 is shown in FIG. 18. The phase adjuster 140 includes inlet and outlet areas 141b and 142b, which are connected to second flow paths 160b through which the second fluid 5 flows. The inlet and outlet areas 141b and 142b are arranged in odd-numbered rows of the phase adjuster 140, for example. The second flow paths 160b of the core 1 include incoming flow paths 161b connected to the inlet area 141b and outgoing flow paths 162b connected to the outlet area 142b. The second fluid 5 is distributed from a header 133c through the inlet area 141b of the phase adjuster 140 to the incoming flow paths 161b. The second fluid 5 that flows from each incoming flow path 161b into each second type passage 21b of the phase adjuster 150 makes a U-turn in odd-numbered rows in the merging part 25 after phase adjustment, and flows into each outgoing flow path 162b of the core 1 through the another-end opening 22b. The second fluid 5 flows from the outgoing flow paths 162b into the outlet area 142b of the phase adjuster 140, and flows out to a header 133d.

According to this configuration, the fluids can make a U-turn.

In the present invention, straight passage columns 23b are not necessarily provided. For example, in a case of the checkered-pattern arrangement in the embodiment, phases can be adjusted to agree with each other by a combination of the inclined passage column 23a whose phase is shifted by one row, and the inclined passage column 23a whose phase is shifted by two rows.

In the present invention, the flow paths 11 of the core 1 can have any structure. The flow paths 11 can be curved, branched or curled inside the core 1, or have cross-sectional shapes changing in the core. A position of one flow path 11 and a position of another flow path 11 in the XY directions in the core 1 can be exchanged. For example, the flow path 11 that is connected to the flow path opening 13 at a position of m1-th row and n1-th column in the core surface 12a which is one end of the core 1 can be connected to the flow path opening 13 at a position of m2-th row and n2-th column (m1 # m2, n1 ≠ n2) the core surface 12b which is another end of the core 1.

For example, a core including flow paths having the structure disclosed in the above Japanese Patent Laid-Open Publication No. JP 2020-46161. In other words, the plurality of flow paths 11 in the core 1 can be formed as a whole in a predetermined direction (Z direction), and positions and outline shapes of the flow paths 11 in a cross section orthogonal to the predetermined direction (Z direction) can change depending on positions of the flow paths in the predetermined direction (Z direction). More specifically, the positions of the plurality of flow paths 11 in the core 1 can change in spiral shapes from the flow path openings 13 in one core surface 12a to the flow path openings 13 on another core surface 12b. Description of the sign

1; core
2, 140, 150; phase adjuster
4; first fluid (first type of fluid)
5; second fluid (second type of fluid)
11; flow path
12a, 12b; core surface
13; flow path opening
13a; first flow path opening
13b; second flow path opening
14a, 121; pair of sides
15a, 111; first type column
15b, 112; second type column
20a; first surface
20b; second surface
20c; third surface
21; passage
22a; one-end opening
22b; another-end opening
23a, 123, 124; inclined passage column
23b; straight passage column
24; inclined part
25; merging part
100; heat exchanger
AP; inclined passage
SP; straight passage
X; row direction
Y; column direction

## Claims

1. A heat exchanger comprising:
a core including a plurality of flow paths through which two or more of different types of fluids flow, and a core surface including a plurality of quadrangular flow path openings that are arranged in a matrix shape and each of which communicates with corresponding one of the plurality of flow paths; and
a phase adjuster including a plurality of passages that are arranged in a matrix shape and each of which is connected to corresponding one of the plurality of flow path openings, and connecting to the core on the core surface, wherein
the plurality of flow path openings are arranged in the core surface so that arrangement patterns of each of the different types of fluids, which flow through the plurality of flow path openings, in columns of the matrix shape are common to each other, and phases of the arrangement patterns in the columns are uncommon to each other,
the plurality of passages of the phase adjuster include inclined passage columns each of which includes inclined passages that extend between one-end openings connected to the plurality of flow path openings and another-end openings, and are inclined in a column direction so as to make the phases of the arrangement patterns in the columns agree with each other, and
the another-end openings of the passages that correspond to each of the different types of fluids are formed row by row in the phase adjuster by aligning the passages through which one of the different types of fluids flow in a row direction for every type.

2. The heat exchanger according to claim 1, wherein
the plurality of passages include straight passage columns each of which includes straight passages that extend straight between the one-end and another-end openings without being inclined in the column direction, and the inclined passage columns; and
the inclined passage columns are inclined so that the phases of the inclined passage columns agree with the phases of the straight passage columns.

3. The heat exchanger according to claim 2, wherein
the plurality of flow path openings in each column include two types of columns, which are a first type column, and a second type column whose phase is shifted by one row with respect to the first type column; and
the inclined passage columns are inclined in the column direction so as to shift the phases of the inclined passage columns by one row with respect to the straight passage columns.

4. The heat exchanger according to claim 1, wherein
the plurality of flow path openings include first flow path openings through which the fluid of a first type passes, and second flow path openings through which the fluid of a second type passes; and
the arrangement patterns in the columns of the plurality of flow path openings are patterns in which the first flow path openings and the second flow path openings are alternatively arranged in the column direction, and the first flow path openings and the second flow path openings are alternately aligned in both the column direction and the row direction in the core surface by alternately aligning a first type column with a second type column shifted by one row with respect to the first type column in the row direction.

5. The heat exchanger according to claim 1, wherein the inclined passages that form the inclined passage columns include inclined parts that are inclined so as to make the phases of the inclined passages agree with phases of other passages in adjacent columns, communicate with the other passages in the adjacent columns in the row direction on sides of the another-end openings with respect to the inclined parts, and form merging parts that transverse a plurality of columns in the row direction.

6. The heat exchanger according to claim 5, wherein
the plurality of flow path openings include pairs of sides that extend in the column direction and have a common length; and
the plurality of passages have common cross-sectional shapes to the flow path openings in the one-end openings, and are configured to make the phases of the passages in the columns agree with each other while keeping the cross-sectional shapes.

7. The heat exchanger according to claim 5, wherein
the phase adjuster includes a first surface connected to the core surface, and second and third surfaces facing each other in the row direction;
one-end parts in the row direction of the merging parts through which the fluid of a first type flows are connected to the another-end openings formed in the second surface; and
another-end parts in the row direction of the merging parts through which the fluid of a second type flows are connected to the another-end openings formed in the third surface.
